# EUROPÄISCHE PATENTSCHRIFT

(11) **EP 3 645 198 B1**
(45) Veröffentlichungstag und Bekanntmachung des Hinweises auf die Patenterteilung: **16.08.2023**
(21) Anmeldenummer: 18730408.4
(22) Anmeldetag: 20.06.2018
(51) Int. Cl.: B23B 51/06

(54) **BOHRER FÜR DIE MEISSELNDE BEARBEITUNG VON GESTEIN**
DRILL FOR CHISELLING ROCK
FORET POUR LE TRAVAIL DE LA ROCHE PAR IMPACT

(30) Priorität: 27.06.2017 EP 17178103
(43) Veröffentlichungstag der Anmeldung: 06.05.2020
(73) Patentinhaber: Hilti Aktiengesellschaft, 9494 Schaan (LI)
(72) Erfinder: BOHN, Klaus-Peter, 9494 Schaan (LI); FOSER, Roland, 9491 Ruggell (LI); HARTMANN, Markus, 87665 Mauerstetten (DE); PLÜMACHER, Bastian, 86830 Schwabmünchen (DE)
(74) Vertreter: Hilti Aktiengesellschaft Corporate Intellectual Property
(86) Internationale Anmeldenummer: PCT/EP2018/066356
(87) Internationale Veröffentlichungsnummer: WO 2019/002037

(56) Entgegenhaltungen:
- EP-A1- 0 048 908
- EP-A2- 0 941 793
- WO-A1-2016/129268
- DE-U1-202009 013 073
- US-A- 1 974 664
- US-A1- 2007 193 784

## Beschreibung

### GEBIET DER ERFINDUNG

Die vorliegende Erfindung betrifft einen Bohrer für die meißelnde Bearbeitung von Gestein gemäß dem Oberbegriff des Anspruchs 1. Ein solcher Bohrer ist aus der WO 2016/129268 A1 bekannt.

Insbesondere betrifft die Erfindung einen Bohrer, bei welchem entstehendes Bohrgut über einen hohlen Schaft abtransportiert werden kann. Der Bohrer hat und benötigt keinen wendelförmigen Schaft.

Aus der EP 0 048 908 A1 ist ein Bohrer mit einer den Bohrerschaft in dessen Längsrichtung mindestens teilweise durchsetzenden Absaugbohrung bekannt, die mit einer Eintrittsöffnung in Verbindung steht, die durch eine Querschnittsverengung einer Mündung der Absaugbohrung gebildet ist.

Aus der WO 2016 129 268 A1 ist ein Saugbohrer bekannt.

Aus der US1974664A ist eine Ölförderrohr mit einem unteren Endstück bekannt.

### OFFENBARUNG DER ERFINDUNG

Erfindungsgemäß wird der Bohrer durch die Merkmale des Anspruchs 1 definiert. Die bevorzugten Ausführungsformen der vorliegenden Erfindung sind durch die abhängigen Ansprüche definiert.

Der Bohrer für die meißelnde Bearbeitung von Gestein hat eine Schlagfläche an einem Einsteckende, einen hohlen Schaft, innerhalb welchem ein Förderkanal vorgesehen ist, und einen Bohrkopf. Der Bohrkopf hat an einer Stirnseite drei oder mehr Schneiden und ein oder mehreren Ansaugöffnungen. Innerhalb des Bohrkopfs sind Ansaugkanäle angeordnet, die die Ansaugöffnungen mit dem Förderkanal verbinden. Die Ansaugöffnungen weisen einen nicht-kreisförmigen Querschnitt aufweisen. Die nicht-kreisförmigen Ansaugöffnungen können bei gleicher Querschnittsfläche näher an der Spitze platziert werden, als kreisförmige Ansaugöffnungen. Die nähere Platzierung an der Spitze verbessert die Absaugleistung, da ein Großteil des Bohrguts unmittelbar an der Spitze anfällt.

Die Ansaugöffnungen haben eine dreieckige Form. Diese erlauben eine besonders nahe Platzierung an der Spitze bei großer Querschnittsfläche.

Erfindungsgemäß ist ein Flächeninhalt der Ansaugöffnung um wenigstens 30 % größer als der Flächeninhalt des größten in die Ansaugöffnung einschreibbaren Inkreises.

In einer bevorzugten Ausgestaltung hat ein Anteil der Ansaugöffnungen an der Stirnfläche des Bohrkopfs größer als 10 % ist. Der Anteil der Ansaugöffnungen an der Stirnfläche des Bohrkopfs ist vorzugsweise geringer als 25 %, ansonsten fällt die Bohrleistung deutlich ab.

In einer bevorzugten Ausgestaltung weisen ein an die Ansaugöffnung angrenzender erster Abschnitt des Ansaugkanals eine erste Neigung gegenüber der Bohrerachse und ein an den hohlen Schaft angrenzender zweiter Abschnitt des Ansaugkanals eine zweite Neigung gegenüber der Bohrerachse auf. Die zweite Neigung ist größer als die erste Neigung.

Die Schneiden des Bohrkopfs sind vorzugsweise aus gesinterten Wolframkarbid. Das harte Material eignet sich besonders für die meißelnde Bearbeitung von Gestein. Die Schneiden können eine Spanfläche und eine Freifläche aufweisen, welche beide einen Teil der Schlagfläche bilden und einander entlang einer Meißelkante berühren. Die Geometrie eignet sich besonders gut für die meißelnde Bearbeitung von Gestein.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 einen Bohrer
Fig. 2 einen Bohrkopf des Bohrers in einer Seitenansicht
Fig. 3 einen Schnitt durch den Bohrkopf
Fig. 4 eine Draufsicht auf die Stirnseite des Bohrkopfs
Fig. 5 einen Bohrkopf des Bohrers in einer Seitenansicht
Fig. 6 einen Schnitt durch den Bohrkopf
Fig. 7 eine Draufsicht auf die Stirnseite des Bohrkopfs
Fig. 8 einen Schnitt durch einen Bohrkopf
Fig. 9 einen Schnitt durch den hohlen Schaft
Fig. 10einen Schnitt durch den hohlen Schaft

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

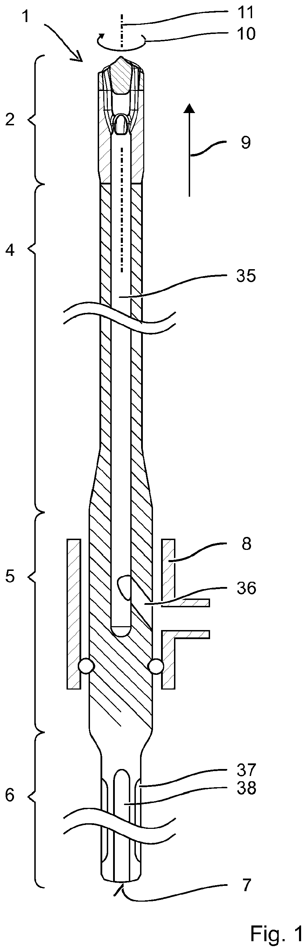

Fig. 1 zeigt einen beispielhaften Bohrer **1.** Der Bohrer 1 hat einen Bohrkopf **2** mit Ansaugöffnungen **3,** einen hohlen Schaft **4** mit einem Absauganschluss **5** und ein Einsteckende **6** mit einer Schlagfläche **7.** Eine Manschette **8** kann den Absauganschluss **5** umschließen.

Der Bohrer **1** ist für den Abbau von mineralischen Bauwerkstoffen, z.B. Beton, Ziegel, ausgelegt. Das Einsteckende **6** kann in einer Handwerkzeugmaschine, z.B. einer Bohrmaschine, einem Bohrhammer, eingesetzt werden. Ein Schlagwerk der Handwerkzeugmaschine schlägt periodisch auf die Schlagfläche **7** an dem Einsteckende **6.** Die Stoßwelle des Schlags durchläuft den hohlen Schaft **4** in Schlagrichtung **9** bis zu dem Bohrkopf **2.** Der Bohrkopf **2** zertrümmert den mineralischen Werkstoff. Der Bohrer **1** wird vorzugsweise zwischen den Schlägen in einem Drehsinn **10** um seine Bohrerachse **11** gedreht. Der Bohrer **1** schlägt in Folge in unterschiedlichen Orientierungen auf den Werkstoff ein. Das entstehende Bohrgut kann unmittelbar von der Stirnseite **12** des Bohrers **1** aus dem Bohrloch entfernt werden. Ein Staubsauger wird an die Manschette **8** angeschlossen. Der Luftstrom saugt das Bohrgut an den Ansaugöffnungen **3** unmittelbar an der Stirnseite **12** des Bohrers **1** an. Das Bohrgut wird innerhalb des hohlen Schafts **4** abtransportiert.

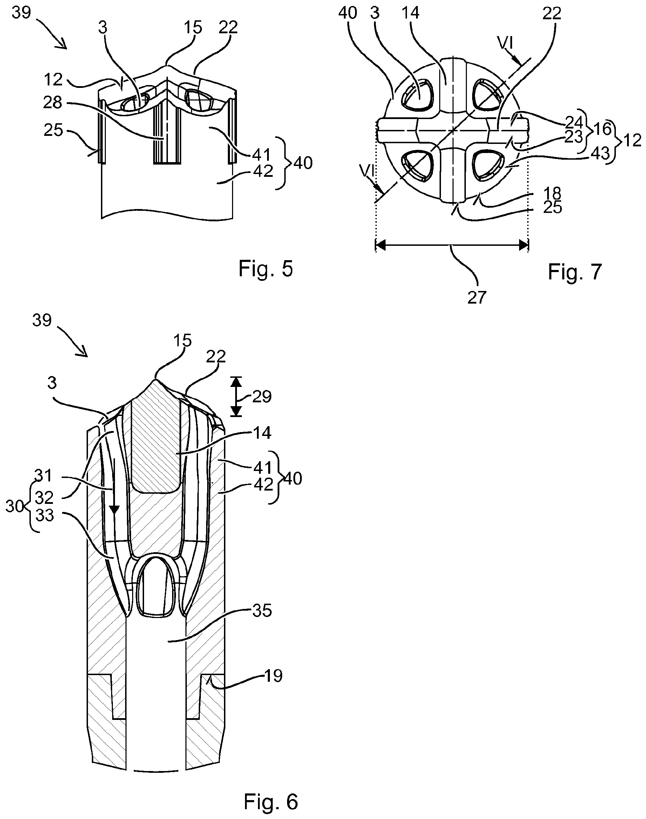

Der beispielhafte Bohrkopf **2** hat einen Sockel **13** und mehrere in den Sockel **13** eingebettete Schneiden **14.** Die Schneiden **14** bilden die Spitze **15** des Bohrkopfs **2.** Die Schneiden **14** stehen gegenüber der Sockel **13** in Schlagrichtung **9** vor. Die Stirnseite **12** des Bohrkopfs **2** setzt sich aus den in Schlagrichtung **9** weisenden Stirnflächen **16** der Schneiden **14** und den Stirnflächen **17** des Sockels **13** zusammen. Der Sockel **13** hat eine zylindrische Mantelfläche **18.** Vorzugsweise stehen die Schneiden **14** in radialer Richtung gegenüber der Mantelfläche **18** vor. Die Mantelfläche **18** kann unterhalb der Schneiden **14** umfänglich geschlossen sein. Eine Unterseite **19** des Sockels **13** ist auf dem hohlen Schaft **4** angeordnet. Die Unterseite **19** kann verschweißt, verlötet oder in analoger Weise materialschlüssig mit dem Schaft **4** verbunden sein. In anderen Ausführungen kann der Bohrkopf **2** mittels einer Schraubverbindung, einem Bajonettverschluss oder vorzugsweise einer Kegelpressverbindung (Fig. 6) mit dem Schaft **4** verbunden sein.

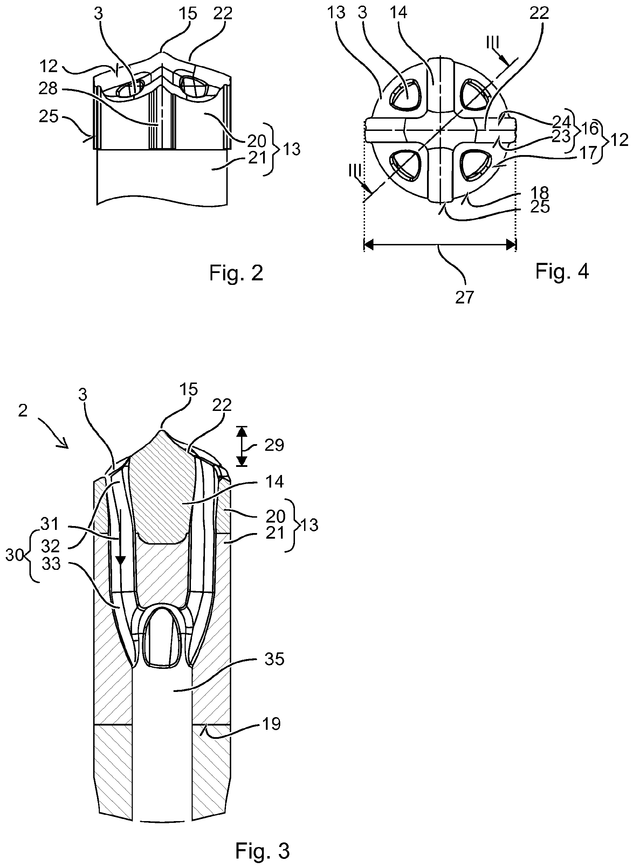

Die Schneiden **14** sind vorzugsweise aus einem gesinterten Wolframkarbid-haltigen Werkstoff. In einer Ausgestaltung kann ein die Schneiden **14** umfänglicher Abschnitt **20** des Sockels **13** aus dem gesinterten Wolframkarbid-haltigen Werkstoff und ein die Unterseite bildender Abschnitt **21** aus dem gesinterten Eisen-basierten Werkstoff hergestellt sein (Fig. 3).

Die Schneiden **14** sind sternförmig um die Bohrerachse **11** angeordnet. Die Schneiden **14** sind monolithisch zusammenhängend, insbesondere ohne Fügezone durch Schweißen, Löten, Klemmen etc. miteinander verbunden. Die Schneiden **14** sind vorzugsweise aus einem Wolframkarbid-haltigem Material gesintert. Die Schneiden **14** sind vorzugsweise regelmäßig oder paarweise regelmäßig um die Bohrerachse **11** angeordnet. Beispielsweise sind die vier identischen Schneiden **14** in Abständen von 90 Grad in dem Drehsinn **10** angeordnet. In anderen Ausführungsformen können die Schneiden unterschiedlich ausgebildet sein. Beispielsweise hat der Bohrkopf Hauptschneiden und Nebenschneiden. Die beispielhafte Ausführungsform zeigt vier Schneiden **14;** in anderen Ausführungsformen kann der Bohrkopf **2** drei, fünf oder sechs Schneiden **14** aufweisen.

Die Schneiden **14** haben jeweils eine in Schlagrichtung **9** vorstehende Meißelkante **22,** welche in radialer Richtung auf eine Spitze **15** des Bohrkopfs **2** zuläuft. Die Meißelkante **22** kann geradlinig oder geschwungen sein. Die Meißelkanten **22** sind vorzugsweise identisch oder paarweise identisch ausgebildet. Bei der dargestellten Ausgestaltung laufen alle Meißelkanten **22** bis zu der Spitze **15;** in anderen Ausgestaltungen reichen nur Meißelkanten der Hauptschneiden bis zu der Spitze **15.** Die einzige Spitze **15** des Bohrkopfs **2** liegt vorzugsweise auf der Bohrerachse **11.**

Die in Schlagrichtung **9** weisende Stirnfläche **16** jeder Schneide **14** ist durch eine Spanfläche **23** und eine Freifläche **24** gebildet. Die Spanfläche **23** und die Freifläche **24** weisen beide in die Schlagrichtung **9** und berühren einander entlang der Meißelkante **22.** Die Spanfläche **23** und die Freifläche **24** sind in radialer Richtung ausgedehnt. Die Spanfläche **23** und die Freifläche **24** erstrecken sich von angrenzend an die äußere Randfläche **25** bis zu der Bohrerachse **11** oder in die Nähe der Bohrerachse **11.** Die Spanfläche **23** ist gegenüber der Freifläche **24** in dem üblichen Drehsinn **10** des Bohrkopfs **2** vorauslaufend. Auf den Bohrkopf **2** blickend ist der übliche Drehsinn **10** entgegen dem Uhrzeigersinn. Die Spanfläche **23** und die Freifläche **24** sind gegenüber der Bohrerachse **11** geneigt. Die Spanfläche **23** steigt entgegen dem Drehsinn **10** in Schlagrichtung **9** an; die Freifläche **24** fällt entgegen dem Drehsinn **10** in Schlagrichtung **9** ab. Die Spanfläche **23** und die Freifläche **24** sind demzufolge zueinander geneigt. Ein Dachwinkel **26** zwischen der Spanfläche **23** und der Freifläche **24** ist größer als 45 Grad, beispielsweise größer als 60 Grad und geringer als 120 Grad. Der Dachwinkel **26** kann in radialer Richtung konstant oder sich ändernd sein.

Eine von der Bohrerachse **11** abgewandte Randfläche **25** der Schneiden **14** ist vorzugsweise parallel zu der Bohrerachse **11** orientiert. Die Randfläche **25** definiert mit ihrem radialen Abstand zu der Bohrerachse **11** den Durchmesser **27** des Bohrkopfs **2.** Die Randfläche **25** bildet eine Abbruchkante **28,** welche beim Bohren an einer Bohrlochwand anliegt. Die Abbruchkanten **28** unterstützen das Ausbilden einer kreiszylindrischen Form des Bohrlochs durch Abbrechen von radial in das Bohrloch vorstehendem Gestein. Die Randfläche **25** steht vorzugsweise in radialer Richtung gegenüber der Mantelfläche **18** des zylindrischen Sockel **13** vor. Die Schneiden **14** unterteilen einen oberen Abschnitt der Mantelfläche **18** in mehrere zylindrische Sektoren. Ein mit dem oberen Abschnitt verbundener unterer Abschnitt der Mantelfläche **18** ist vorzugsweise umfänglich geschlossen, d.h. vollkommen zylindrisch.

An der Stirnseite **12** des Bohrkopfs **2** sind mehrere Ansaugöffnungen **3** vorgesehen. Die Ansaugöffnungen **3** können mittig zwischen benachbarten Meißelkanten **22** angeordnet sein. Die Ansaugöffnungen **3** liegen vorzugsweise in den Stirnflächen **17** des Sockels **13.** Die Ansaugöffnungen **3** sind umfänglich geschlossen, hierzu sind die Ansaugöffnungen **3** beabstandet zu der Mantelfläche **18** angeordnet. Ein radialer Abstand der Ansaugöffnungen **3** liegt beispielsweise zwischen 5 % und 20 % des Durchmessers des Bohrkopfs **2.** Die Ansaugöffnungen **3** sind längs der Bohrerachse **11** versetzt zu den Meißelkanten **22** angeordnet. Die Ansaugöffnungen **3** liegen tiefer als die Meißelkanten **22** und beeinflussen somit nicht oder in vernachlässigbaren Maß die meißelnde Funktionalität des Bohrkopfs **2.** Ein axialer Versatz **29** der Ansaugöffnungen **3** zu der Spitze **15** ist vorzugsweise größer als 15 % des Durchmesser **27** des Bohrers **1.**

Jeweils ein Ansaugkanal **30** verbindet die Ansaugöffnungen **3** von der Stirnseite **12** mit der Unterseite **19** des Bohrkopfs **2.** Die vorgegebenen Strömungsrichtung **31** ist von den Ansaugöffnungen **3** zu der Unterseite **19,** d.h. entgegen der Schlagrichtung **9.** Der Ansaugkanal **30** ist quer zu der Strömungsrichtung über die gesamte Länge geschlossen. Der Ansaugkanal **30** verläuft dazu vollständig innerhalb des Sockels **13.**

Der Ansaugkanal **30** nähert sich längs der Strömungsrichtung **31** der Bohrerachse **11** an. Die Annäherung erfolgt nicht geradlinig, sondern der Ansaugkanal **30** ist wenigstens abschnittsweise gekrümmt. Ein oberer Abschnitt **32** des Ansaugkanals **30** angrenzend an die Ansaugöffnungen **3** ist im Wesentlichen parallel zu den Schneiden **14,** d.h. zu der Bohrerachse **11.** Der Ansaugkanal **30** nähert sich nicht oder nur in geringem Maß den Schneiden **14** in Strömungsrichtung **31** an. Eine Annäherung des Ansaugkanals **30** an die Bohrerachse **11** in dem oberen Abschnitt **32** ist vorzugsweise geringer als 5 % des Durchmessers **27** des Bohrers **1.** Als Maß für die Bestimmung des radialen Abstands kann der Flächenschwerpunkt in den Querschnitten senkrecht zu der Bohrerachse **11** herangezogen werden. Der obere Abschnitt **32** erstreckt sich über wenigstens 50 %, z.B. 75 %, der Höhe der Schneiden **14,** vorzugsweise wenigstens die gesamte Höhe der Schneiden **14.** Der obere Abschnitt **32** kann geradlinig oder gekrümmt ausgebildet sein. Ein unterer Abschnitt **33** des Ansaugkanals **30** angrenzend an den hohlen Schaft **4** ist gegenüber den Schneiden **14** geneigt. Der untere Abschnitt **33** nähert sich in Richtung zu dem Schaft **4** zunehmend der Bohrerachse **11** an. Der untere Abschnitt **33** des Ansaugkanals **30** kann mit einer Neigung zwischen 10 Grad und 30 Grad in den hohlen Schaft **4** einlaufen. Der Ansaugkanal **30** nähert sich vorzugsweise zwischen 5 % und 30 % des Durchmesser **27** des Bohrers **1** an die Bohrerachse **11** an. Der beispielhafte untere Abschnitt **33** ist durchgehend gekrümmt. Der untere Abschnitt kann auch geradlinig ausgestalten sein. Ein den oberen Abschnitt mit dem unteren Abschnitt verbindender Abschnitt ist entsprechend gekrümmt. Alle gekrümmten Abschnitte des Ansaugkanals **30** haben vorzugsweise einen Krümmungsradius größer als 80 % des Durchmessers **27** des Bohrers **1** Der Ansaugkanal **30** hat über seine gesamte Länge glatte Innenwände. Die sanften Krümmungen mit den großen Krümmungsradien begünstigen einen reibungslosen Transport des Bohrguts in den Ansaugkanälen **30.** Insbesondere wird ein Verklemmen oder Verkannten von größeren Bohrgutstücken vermieden.

Die Ansaugöffnungen **3** haben einen Flächenanteil von 10 % bis 25 % an der Stirnseite **12.** Der hohe Anteil ist vorteilhaft, um einen Abtransport des Bohrguts zu gewährleisten. Der Ansaugkanal **30** kann einen entlang der Strömungsrichtung **31** sich erweiternden Querschnitt aufweisen. Den geringsten Querschnitt hat der Ansaugkanal **30** an oder nahe der Ansaugöffnung **3.** Die Querschnittsänderung verringert eine Neigung des Ansaugkanals **30** zu verstopfen. Der Flächeninhalt des Querschnitts ändert sich um wenigstens 30 %, vorzugsweise um mehr als 60 % ändern. Der Flächeninhalt des Querschnitts wird in Ebenen senkrecht zu der Bohrerachse **11** bestimmt. Die Änderung erfolgt vorzugsweise vollständig oder hauptsächlich innerhalb des oberen Abschnitts **32,** d.h. auf Höhe der Schneiden **14.** Eine radial äußere Wandung der Ansaugkanäle **30** ist vorzugsweise parallel zu der Bohrerachse **11,** während eine radial innere Wandung der Ansaugkanäle **30** sich an die Bohrerachse **11** annähert, um die Querschnittserweiterung zu erhalten.

Die beispielhaften Ansaugöffnungen **3** sind nicht-kreisförmig. Die Ansaugöffnungen **3** haben eine dreieckige Form. Ecken der Ansaugöffnungen **3** können spitz oder gerundet sein. Die die Ecken verbindenden Seiten können geradlinig oder gewölbt ein. Für ein Dreieck kennzeichnend ist ein Kreis in die Ansaugöffnung **3** einschreibbar, welcher jede der drei Seiten in genau einem Punkt berührt. Ferner nimmt für ein Dreieck kennzeichnend ein Abstand zwischen dem Mittelpunkt des eingeschriebenen Kreises zu den Seiten ausgehend von den Ecken bis zu dem von dem Kreis berührten Punkt kontinuierlich ab. Eine Ecke der Ansaugöffnungen **3** weist zu der Spitze **15** des Bohrkopfs **2.** Ein Innenwinkel **34** an der Ecke entspricht vorzugsweise etwa dem Winkelabstand zwischen den benachbarten Schneiden **14,** z.B. 90 Grad. Etwa beschreibt in diesem Kontext eine Abweichung von weniger als 20 %. Der Flächeninhalt der Ansaugöffnungen **3** ist deutlich größer als der Flächeninhalt des eingeschriebenen Kreises. Der Flächeninhalt der Ansaugöffnungen **3** ist um wenigstens 30 % größer, z.B. wenigstens 100 % größer.

Der hohle Schaft **4** hat einen längs der Bohrerachse **11** verlaufenden Förderkanal **35.** Der Förderkanal **35** hat einen konstanten Querschnitt über die Länge des Schafts **4.** Ein Flächeninhalt des Querschnitts des Förderkanals **35** ist vorzugsweise gleich der Summe der Querschnitte der Ansaugkanäle **30.** Der Förderkanal **35** hat beispielsweise einen Flächenanteil von 15 % bis 65 % an dem Querschnitt des Schafts **4.** Der Förderkanal **35** kann zentral auf der der Bohrerachse **11** angeordnet sein. Der Förderkanal **35** endet unterhalb des Bohrkopfs **2,** insbesondere unterhalb des Sockels **13.** Das Ende des Förderkanals **35** ist vorzugsweise kalottenförmig gerundet.

Die Ansaugkanäle **30** von dem Bohrkopf **2** münden in den Förderkanal **35** des hohlen Schafts **4.** Die Einmündung ist an oder nahe einem Ende des Förderkanals **35.** Die Flächen an der Einmündung sind abgerundet.

An einem dem Bohrkopf **2** abgewandten Ende des Förderkanals **35** ist der Absauganschluss **5** angeordnet. Der Absauganschluss **5** enthält einen radialen Durchstich **36** in den Förderkanal **35.** Die Manschette **8** umschließt, vorzugsweise luftdicht, den zylindrischen Schaft im Bereich des Durchstichs **36.** Die Manschette **8** ist gegenüber dem Schaft **4** drehbar.

Das beispielhafte Einsteckende **6** des Bohrers **1** ist für die Verwendung von dreh-meißelnden Handwerkzeugmaschinen ausgelegt. Das Einsteckende **6** hat eine im Wesentlichen zylindrische Form. Das Einsteckende **6** hat zwei geschlossene Nuten **37,** in welche Verriegelungselemente der Handwerkzeugmaschine radial eingreifen und längs der Bohrerachse **11** gleiten können. Zur Bohrerachse **11** längs ausgerichtete Rillen **38** ermöglichen ein Einleiten eines Drehmoments von der Handwerkzeugmaschine.

Der Bohrer **1** ist vorzugsweise aus verschiedenen Materialen gefertigt. Der Schaft **4** und das Einsteckende **6** sind vorzugsweise aus einem zähen und duktilen Stahl. Die Schneiden **14** des Bohrkopfs **2** sind aus sehr harten und Abrasions-beständigen gesinterten Wolframkarbid. Das Wolframkarbid hat einen Volumenanteil von wenigstens 70 Vol.-%. Der metallische Binder enthält vorzugsweise eines oder mehrere der Metalle: Kobalt und Nickel. Beispielsweise kann der Binder vollständig aus Kobalt bestehen.

Der Bohrkopf **2** lässt sich nicht in gewöhnlicher Weise in einer Urform herstellen, welche nachträglich spanend bearbeitet wird, um die Ansaugkanäle **30** zu formen. Nachfolgend wird ein Herstellungsverfahren vorgeschlagen, mit welchem sich die gewünschten Ansaugkanäle **30** formen lassen. Das beschriebene Herstellungsverfahren kann in Details abgewandelt werden, ohne dabei von seinem Prinzip abzuweichen.

Eine dünne Pulverschicht wird durch Versprühen einer Suspension mit Wolframkarbid und dem metallischen Binder hergestellt. Ein Kleber wird auf die Pulverschicht strukturiert gedruckt. Der Kleber zeichnet einen Querschnitt durch den Bohrkopf **2** nach. Die Abscheidung einer Pulverschicht und des Klebers wird so häufig wiederholt, bis ein Rohling des Bohrkopfs **2** nachgebildet ist. Das überschüssige Pulver, insbesondere in den Ansaugkanälen **30,** kann durch Wasser entfernt werden. Das Wasser dringt zwischen die nicht durch Kleber verbundenen Schichten ein und sprengt diese ab. Der entstandene Rohling entspricht nun der Form des Bohrkopfs **2.** Der Grünling kann gesintert werden.

Die Problematik bei der Herstellung des Bohrkopfs **2** beruht auf der hohen mechanischen Anforderung an den Bohrkopf **2,** welche nur eine sehr geringe Porosität zulässt. Eine notwendige Dichte des Bohrkopfs **2** muss größer als 98 % des theoretisch erreichbaren Wertes sein. Der Grünling muss dazu vor dem Sintern eine Dichte von wenigstens 50 % der theoretischen Dichte aufweisen. Das Sintern wird durch ein typisches Schrumpfen begleitet, welches ab diesem Wert die Poren ausreichend schließt. Herkömmliche Verfahren mittels eines Verpressens des Grünlings in einer Form erreichen diese Werte. Das lose Aufeinanderfügen der Schichten, im Prinzip allein durch die Gravitation, stellt uns hier vor neue Herausforderungen.

Ein vielversprechender Ansatz basiert auf einem Pulvergemisch aus Wolframkarbid und Kobaltoxid. Das Kobaltoxid wird nach Bilden des Grünlings in Kobalt umgewandelt. Die Suspension enthält als Flüssigkeit Wasser oder Alkohol, vorzugsweise Isopropylalkohol. Das Verhältnis von Flüssigkeit zu Pulver liegt im Bereich zwischen 3 bis 5 zu 1. Die Suspension lässt sich unter Druck durch eine dünne Düse gleichmäßig versprühen. Nach dem Versprühen wird die Schicht bei etwas über Raumtemperatur getrocknet. Die Schichten haben eine gleichmäßige Stärke im Bereich zwischen 20 µm und 30 µm. Der Kleber basiert auf einer wässrigen Lösung von Polyethylenimin. Polyethylenimin zeigt eine sehr hohe Affinität sich an die Körner des Wolframkarbids zu binden. Hierdurch wird ein gutes Verkleben erreicht. Der Gewichtsanteil von Polyethylenimin in der Lösung kann im Bereich zwischen 1 % und 5 % liegen. Nach dem Drucken wird der Kleber bei etwas über Raumtemperatur getrocknet. Nach dem Aufbringen der letzten Schicht wird der Kleber in einem Ofen bei etwa 150 Grad Celsius (°C) ausgehärtet. Anschließend wird durch Wasser das überschüssige Pulver entfernt. Das Kobaltoxid in dem Grünling wird in Kobalt umgewandelt, indem der Grünling in einer Wasserstoff-haltigen Atmosphäre bei 600°C bis 700°C für mehrere Stunden gehalten wird. Final kann der Grünling bei einer Temperatur zwischen 1250°C und 1400°C gesintert werden.

Der eisenhaltige untere Abschnitt **21** des Sockels **13** kann ebenfalls über eine dreidimensionale Formgebung hergestellt. Beispielsweise kann ebenfalls ein Grünling gedruckt und anschließend gesintert werden. Für die Herstellung von Stahlkörpern sind darüber hinaus auch Verfahren wie das Laserauftragsschweißen, selektives Laserschmelzen (SLM) oder selektives Lasersintern (SLS) möglich.

Eine andere Ausführungsform des Bohrkopfs **39** ist in den Fig. 5, Fig. 6 und Fig. 7 gezeigt. Die Schneiden **14** sind kreuzförmig ausgebildet, wie in der Ausführungsform von Fig. 2. Die Schneiden **14** sind vorzugsweise aus Wolframkarbid gesintert. Der Sockel **40** hat wie in der vorhergehenden Ausführungsform einen oberen Abschnitt **41** und einen unteren Abschnitt **42.** Der Unterschied zu der vorherigen Ausführungsform besteht darin, dass der Sockel **40** aus einem Material gebildet ist. Der obere Abschnitt **41** ist in diesem Fall auch aus einem eisenhaltigen Material gebildet. Der obere Abschnitt **41** hat einen kreuzförmigen Schlitz, in welchen die Schneiden **14** eingesetzt sind. Die Stirnseite **12** des Bohrkopfs **2** besteht hierdurch aus den harten Schneiden **14** und der Stirnfläche **43** des relativ weicheren Sockel **40.** Die Schneiden **14** können mit dem Sockel **40** verlötet oder verschweißt sein.

Die Ansaugkanäle **30** laufen geschlossen in dem oberen Abschnitt **41** des Sockels **13.** Die Ansaugkanäle **30** sind sowohl zu dem Umfang des Bohrkopfs **2** als auch zu den Schneiden **14** beabstandet. Der Verlauf der Kanäle und deren weiteren Eigenschaften können der vorherigen Ausführungsform entsprechen.

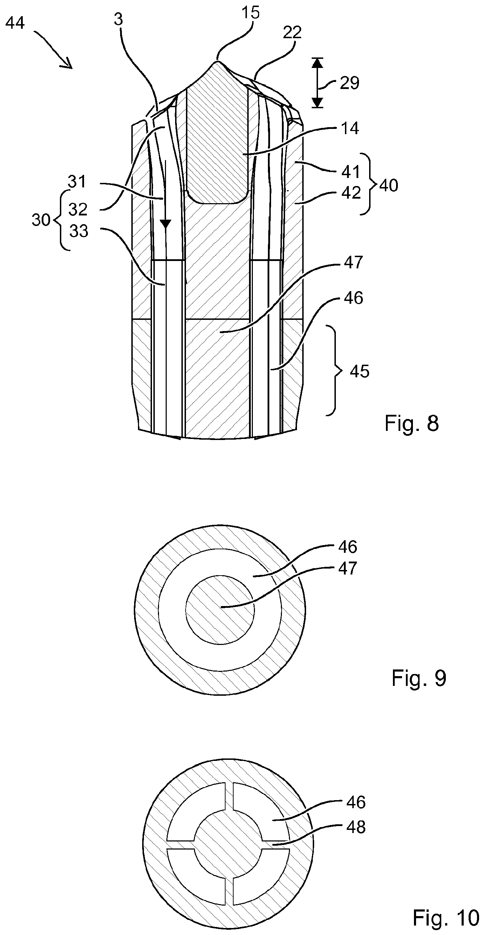

Ein andere Ausführungsform ist in Fig. 8 gezeigt. Der Bohrkopf **44** hat ebenfalls einen Sockel **40** und vier Schneiden **14.** Der Sockel **40** und die Schneiden **14** können wie in einer der vorhergehenden Ausführungsformen geformt sein. Die Ansaugöffnungen **3** sind an Sockel **40** angeordnet, die Ansaugkanäle **30** verlaufen in dem Sockel **40** analog den vorhergehenden Ausführungsformen. Der hohle Schaft **45** hat einen Förderkanal **46** und eine Seele **47.** Die Seele **47** ist eine stabförmige massive Struktur, welche auf der Bohrerachse **11** liegt. Ein Schlag auf die Schlagfläche **7** wird über die Seele **47** auf die Schneiden **14** übertragen. Der Förderkanal **46** kann beispielsweise die Seele **47** ringförmig umschließen (Fig. 9). Die Ansaugkanäle **30** öffnen sich in den Förderkanal **46.** Die Seele **47** kann sich über Streben **48** an der Außenhülle des Schafts **4** abstützen (Fig. 10). Die Streben **48** können den Förderkanal **46** in mehrere Kanäle unterteilen, z.B. kann jedem Ansaugkanal **30** ein Förderkanal **35 48** zugeordnet sein.

## Patentansprüche

1. Bohrer (1) für die meißelnde Bearbeitung von Gestein mit
einer Schlagfläche (7) an einem Einsteckende (6),
einem hohlen Schaft (4), innerhalb welchem ein Förderkanal (35) vorgesehen ist,
einem Bohrkopf (2), der ein oder mehrere Ansaugöffnungen (3) aufweist und innerhalb welchem Ansaugkanäle (30) angeordnet sind, die die Ansaugöffnungen (3) mit dem Förderkanal (35) verbinden, wobei der Bohrkopf an einer Stirnseite (12) drei oder mehr Schneiden (14) aufweist und die Ansaugöffnungen (3) einen nicht-kreisförmigen Querschnitt und eine dreieckige Form aufweisen,
**dadurch gekennzeichnet,**
**dass** ein Flächeninhalt des Querschnitts der Ansaugöffnung (3) um wenigstens 30 % größer als der Flächeninhalt des größten in die Ansaugöffnung einschreibbaren Inkreises ist.

2. Bohrer (1) nach dem vorhergehenden Anspruch, **dadurch gekennzeichnet, dass** die Ansaugöffnungen (3) einen Flächenanteil von 10 % bis 25 % an der Stirnseite (12) haben.

3. Bohrer (1) nach einem der vorhergehenden Ansprüche, **dadurch gekennzeichnet, dass** die Schneiden (14) eine Spanfläche (23) und eine Freifläche (24) aufweisen, wobei die Spanfläche (23) und die Freifläche (24) beide in eine Schlagrichtung (9) weisen und einander entlang einer Meißelkante (22) berühren.

4. Bohrer nach einem der vorhergehenden Ansprüche, **dadurch gekennzeichnet, dass** die Schneiden (14) aus gesinterten Wolframkarbid sind.

## Claims

1. Drill bit (1) for chiselling of rock, having
an impact face (7) on a shank (6),
a hollow shaft (4) within which a conveying channel (35) is provided,
a drill head (2) which has one or more intake openings (3) and within which there are arranged intake channels (30) which connect the intake openings (3) to the conveying channel (35), wherein the drill head has three or more cutting edges (14) on an end face (12) and the intake openings (3) have a non-circular cross section and a triangular shape, **characterized**
**in that** an area of the cross section of the intake opening (3) is at least 30% greater than the area of the largest circle which is inscribable in the intake opening.

2. Drill bit (1) according to the preceding claim, **characterized**
**in that** the intake openings (3) take up 10% to 25% of the end face (12) in terms of area.

3. Drill bit (1) according to either of the preceding claims, **characterized**
**in that** the cutting edges (14) have a rake face (23) and a flank face (24), wherein the rake face (23) and the flank face (24) both face in an impact direction (9) and are in contact with one another along a chisel edge (22).

4. Drill bit according to one of the preceding claims, **characterized**
**in that** the cutting edges (14) are composed of sintered tungsten carbide.

## Revendications

1. Foret (1) destiné à buriner la roche, ledit foret comprenant
une surface de percussion (7) à une extrémité d'enfichage (6),
une tige creuse (4) à l'intérieur de laquelle est ménagé un canal d'acheminement (35), une tête de forage (2) qui comporte un ou plusieurs orifices d'aspiration (3) et à l'intérieur de laquelle sont ménagés des canaux d'aspiration (30) qui relient les orifices d'aspiration (3) au canal d'acheminement (35), la tête de forage comportant trois arêtes de coupe (14) ou plus sur un côté frontal (12) et les orifices d'aspiration (3) ayant une section transversale non circulaire et une forme triangulaire,
**caractérisé en ce que** l'aire en coupe transversale de l'orifice d'aspiration (3) est supérieure d'au moins 30 % à l'aire du plus grand cercle inscrit pouvant être inscrit dans l'orifice d'aspiration.

2. Foret (1) selon la revendication précédente, **caractérisé en ce que**, du côté frontal (12), les orifices d'aspiration (3) présentent un pourcentage de surface de 10 % à 25 %.

3. Foret (1) selon l'une des revendications précédentes, **caractérisé en ce que** les arêtes de coupe (14) comportent une face de coupe (23) et une face de dépouille (24), la face de coupe (23) et la face de dépouille (24) étant dirigées toutes les deux dans une direction de percussion (9) et se touchant le long d'un bord biseauté (22).

4. Foret selon l'une des revendications précédentes, **caractérisé en ce que** les arêtes de coupes (14) sont en carbure de tungstène fritté.
